# EUROPÄISCHE PATENTSCHRIFT

(11) **EP 4 681 017 B1**
(45) Veröffentlichungstag und Bekanntmachung des Hinweises auf die Patenterteilung: **18.11.2026**
(21) Anmeldenummer: 24707008.9
(22) Anmeldetag: 21.02.2024
(51) Int. Cl.: G02C 3/00, G02C 5/14

(54) **BRILLENBÜGEL**
TEMPLE ARM FOR EYEWEAR
BRAS DE BRANCHE DE LUNETTES

(30) Priorität: 15.03.2023 DE 102023202345
(43) Veröffentlichungstag der Anmeldung: 21.01.2026
(73) Patentinhaber: Uvex Arbeitsschutz GmbH, 90766 Fürth (DE)
(72) Erfinder: KREITSCHMANN, Tobias, 90522 Oberasbach (DE); WOLF, Martin, 91522 Ansbach (DE)
(74) Vertreter: Rau, Schneck & Hübner Patentanwälte Rechtsanwälte PartGmbB
(86) Internationale Anmeldenummer: PCT/EP2024/054408
(87) Internationale Veröffentlichungsnummer: WO 2024/188612

(56) Entgegenhaltungen:
- US-B1- 9 188 795
- US-S- D 550 755
- US-S- D 797 183

## Beschreibung

Die Erfindung betrifft einen Brillenbügel, insbesondere für eine Arbeitsschutzbrille. Der Brillenbügel ist alternativ beispielsweise bei Sportbrillen, Sonnenbrillen oder optischen Brillen einsetzbar.

Aus dem Stand der Technik sind durch offenkundige Vorbenutzung Brillenbügel bekannt, die häufig die Ohren der Brillenträger umgreifen und an deren Kopfrundungen angepasst sind. Die Brillenbügel bzw. Brillen sind so an dem Kopf des jeweiligen Brillenträgers haltbar. Um den Halt zu verbessern, ist es zum Beispiel auch bekannt, dass die Brillenbügel mit (hohem) Anpressdruck an dem Kopf des Brillenträgers anliegen. Häufig ist das Tragen von Brillen mit derartigen Brillenbügeln nicht zufriedenstellend. Der Halt oder der Tragekomfort ist oftmals nicht gut. Ein sicherer Halt erfordert einen hohen Anpressdruck. Der Tragekomfort ist bei niedrigerem Anpressdruck höher.

Die US 9,188,795 B1 offenbart einen gattungsgemäßen Brillenbügel. Die US D797,183 S und US D550,755 S offenbaren weitere Brillenbügel.

Die US 9,703,117 B2 offenbart einen Brillenbügel. Der Brillenbügel hat einen Grundkörper und eine Abdeckung. Der Grundkörper und die Abdeckung bestehen aus unterschiedlichen Materialien. Der Grundkörper weist eine Mehrzahl von Querstegen auf, die sich zwischen einem oberen Rand und einem unteren Rand erstrecken. Die Querstege schließen einen Winkel mit einem Rand ein. Sie haben alle den gleichen Winkel. Dieser Brillenbügel sorgt nicht immer für einen sicheren bzw. komfortablen Sitz einer Brille.

Ein aus der US 6,758,562 B1 bekannter Brillenbügel hat eine Vielzahl von Öffnungen, um eine Flexibilität des Brillenbügels zu erhöhen. Mindestens eine Öffnung ist länglich. Die Öffnung ist derart orientiert, dass sie sich im Wesentlichen vertikal erstreckt.

Die US 2,659,270 offenbart einen Brillenbügel mit Öffnungen.

Der Erfindung liegt die Aufgabe zugrunde, die Nachteile des Standes der Technik zu überwinden und einen Brillenbügel bereitzustellen, der im Einsatz zum einen einen besonders sicheren Sitz bzw. Halt liefert und zum anderen einen äußerst hohen Tragekomfort bietet. Ferner soll der Brillenbügel imstande sein, sich möglichst gut an unterschiedliche Kopfformen bzw. -größen anzupassen.

Diese Aufgabe wird erfindungsgemäß durch die in dem unabhängigen Anspruch 1 angegebenen Merkmale gelöst. Der Kern der Erfindung liegt in den Trennstegen, die die Durchgänge, zum Beispiel vollständig, voneinander trennen und unterschiedlich orientiert bzw. geneigt sind. Zumindest einer der Trennstege verläuft günstigerweise schräg zu der Brillenbügel-Längslinie bzw. -richtung, die sich bevorzugt zumindest bereichsweise gekrümmt erstreckt. Es ist zweckmäßig, wenn mindestens ein Trennsteg (im Wesentlichen) senkrecht zu der Brillenbügel-Längslinie verläuft. Die unterschiedlich zueinander geneigt angeordneten Trennstege führen zu einem verbesserten Tragekomfort und Passsitz. Sie sind vorzugsweise federnd ausgebildet. Die Durchgänge erlauben zum Beispiel eine Materialeinsparung bzw. Gewichtsreduzierung.

Der jeweilige Halteüberstand sorgt zum Beispiel für einen besonders sicheren und angenehmen Sitz des Brillenbügels an dem Kopf des Brillenträgers. Dies ist zum Beispiel bei anspruchsvollen Arbeiten, wie über Kopf und/oder bei nach vorne gebeugten Arbeiten, besonders vorteilhaft.

Der Brillenbügel ist vorzugsweise aus Kunststoff gebildet. Er ist bevorzugt einteilig bzw. einstückig.

Der Brillenbügel hat an dem gelenkseitigen Ende mindestens ein Gelenkmittel, wie Gelenkstift, Gelenkvorsprung, Gelenkaufnahme, Gelenköffnung, Gelenkbohrung oder dergleichen. Das mindestens eine Gelenkmittel gibt bevorzugt dem Brillenbügel in montiertem Zustand eine Schwenkachse vor.

Der Brillenbügel weist an seiner Innenseite und/oder Außenseite beispielsweise mindestens eine Vertiefung, Erhöhung oder dergleichen auf. Er hat zum Beispiel unterschiedliche Dicken.

Die Durchgänge haben bevorzugt verschiedenartige Größen bzw. Öffnungsweiten. Es ist zweckmäßig, wenn diese unterschiedliche Formen aufweisen. Es ist von Vorteil, wenn jeder Durchgang an der Innenseite und/oder Außenseite eine eckige, wie viereckige, Kontur hat. Andere Konturen, wie rund, oval, elliptisch oder dergleichen, sind alternativ möglich. Die Durchgänge sind vorzugsweise in einer Reihe angeordnet und günstigerweise vollständig umfangsseitig geschlossen. Bevorzugt sind sie in einem Ohrbereich des Brillenbügels und/oder benachbart zu diesem angeordnet. Die Durchgänge reduzieren zum Beispiel im Einsatz des Brillenbügels einen Kontaktbereich mit dem Kopf des Brillenträgers und sorgen so für ein verbessertes Klima an dem Kopf.

Jeder Trennsteg hat bevorzugt in einem Längsschnitt des Brillenbügels bzw. in einem entsprechenden Trennsteg-Querschnitt eine konstante bzw. gleichbleibende Form. Es ist zweckmäßig, wenn jeder Trennsteg mindestens einen Durchgang teilweise räumlich begrenzt. Jeder Trennsteg ist günstigerweise länglich.

Vorzugsweise weist der Brillenbügel zwischen zwei und acht Durchgänge und zwischen einem und sieben Trennstege auf. Bevorzugt ist die Konstellation von Durchgängen und Trennstegen je nach Anwendung und Ausgestaltung größer und kleiner in Ausführung und Anzahl skalierbar.

Eine Brille umfasst bevorzugt mindestens eine Brillenscheibe und zum Beispiel einen Brillenrahmen sowie mindestens zwei Brillenbügel. Die Brillenbügel sind vorzugsweise an der Brillenscheibe und/oder dem Brillenrahmen, sofern vorhanden, angelenkt. Die Brille ist vorzugsweise symmetrisch.

Weitere vorteilhafte Ausgestaltungen der Erfindung sind in den Unteransprüchen angegeben.

Die Ausgestaltung gemäß dem Unteranspruch 2 führt zu einem verbesserten Halt der Brille beim Tragen derselben. Sie ist insbesondere für das Absetzen der Brille optimiert.

Auch die Ausbildung gemäß dem Unteranspruch 3 erlaubt einen verbesserten Halt. Sie ist insbesondere für das Aufsetzen der Brille optimiert. Die dem gelenkseitigen Ende und freien Ende folgenden Trennstege sind so gegensinnig geneigt.

Der mindestens eine zentrale Trennsteg gemäß dem Unteranspruch 4 ist günstigerweise zwischen dem mindestens einen dem gelenkseitigen Ende folgenden schrägen Trennsteg und dem mindestens einen dem freien Ende folgenden schrägen Trennsteg angeordnet. Beispielsweise ist/sind genau ein bis drei zentrale Trennstege vorhanden. Diese verlaufen, sofern mehrere vorhanden, bevorzugt (im Wesentlichen) parallel zueinander.

Auch die Ausgestaltung gemäß dem Unteranspruch 5 führt zu einem verbesserten Komfort bzw. Tragesitz. Die Trennstege weisen beispielsweise in dem Längsschnitt des Brillenbügels abgerundete und/oder abgeflachte Eckbereiche auf. Genau betrachtet hat jeder Trennsteg zum Beispiel in dem Längsschnitt des Brillenbügels eine Trapezform, die jedoch insgesamt im Wesentlichen dreieckförmig ist.

Die Trennstege gemäß dem Unteranspruch 6 sind bevorzugt funktionsoptimiert bzw. belastungsoptimiert ausgebildet. Insbesondere sind Winkel zwischen benachbarten Flächen unterschiedlich.

Der Winkel gemäß dem Unteranspruch 7 ist bevorzugt ein hinterer Winkel bzw. ein hinten an dem jeweiligen Trennsteg ausgebildeter Winkel und ist günstigerweise dem gelenkseitigen Ende abgewandt. Er bildet vorzugsweise einen Klemmwinkel. Der/ein Klemmwinkel ist vorzugsweise spitz. Es ist von Vorteil, wenn die (freien bzw. wirksamen) Seiten bzw. Flanken der Trennstege jeweils eben sind.

Es ist zweckmäßig, wenn die Trennstege in dem Längsschnitt des Brillenbügels eine bei einem Aufsetzen der Brille vorauseilende wirksame flache (hintere) Rampe ausbilden. Günstigerweise bilden die Trennstege in dem Längsschnitt des Brillenbügels eine bei einem Absetzen der Brille vorauseilende wirksame steile (vordere) Rampe aus.

Der wirksame Klemmwinkel ist bevorzugt von einem Gebrauch abhängig. Er ist günstigerweise bei einem Aufsetzen der Brille flach und vorzugsweise bei einem Absetzen der Brille steil.

Der jeweilige Halteüberstand gemäß dem Unteranspruch 8 sorgt zum Beispiel für einen besonders sicheren und angenehmen Sitz des Brillenbügels an dem Kopf des Brillenträgers. Dies ist zum Beispiel bei anspruchsvollen Arbeiten, wie über Kopf und/oder bei nach vorne gebeugten Arbeiten, besonders vorteilhaft.

Jede vordere Halteflanke gemäß dem Unteranspruch 9 liegt bevorzugt zumindest teilweise frei. Sie ist günstigerweise eben. Es ist zweckmäßig, wenn jede vordere Halteflanke durch eine Trennsteg-Vorderseite gebildet ist. Sie ist vorzugsweise beim Aufsetzen der Brille wirksam.

Jede hintere Halteflanke gemäß dem Unteranspruch 10 liegt vorzugsweise zumindest teilweise frei. Es ist von Vorteil, wenn sie eben ist. Bevorzugt ist jede hintere Halteflanke durch eine Trennsteg-Innenseite gebildet ist. Sie ist günstigerweise beim Absetzen der Brille wirksam.

Die Weichkomponente gemäß dem Unteranspruch 12 ist bevorzugt durch ein Kunststoffmaterial gebildet. Sie ist bevorzugt elastisch bzw. nachgiebig. Die Weichkomponente ist günstigerweise imstande, eine elastische Dehnung zu erfahren bzw. zu federn. Es ist zweckmäßig, wenn die Weichkomponente insbesondere durch eine gebogene Auslegung eine Tiefe bzw. Dicke des Brillenbügels nutzt, um zu federn. Die Federeigenschaft wirkt bevorzugt einer Aufbiegung entgegen und sorgt für einen rückfedernden Effekt. Sie erlaubt einen druckfreien Sitz bzw. Halt an dem Kopf des Brillenträgers. Der Brillenbügel ist so beispielsweise auch imstande, sich an unterschiedliche Kopfbreiten anzupassen. Die Weichkomponente sorgt auch für einen rutschsicheren Halt des Brillenbügels an dem Kopf des Brillenträgers und ermöglicht ein komfortables Tragen. Es ist zweckmäßig, wenn sich die Weichkomponente (im Wesentlichen) über die gesamte Länge des Brillenbügels erstreckt. Es ist von Vorteil, wenn die Trennstege und/oder Halteüberstände zumindest teilweise, bevorzugt vollständig, durch die Weichkomponente gebildet sind.

Die Hartkomponente gemäß dem Unteranspruch 13 ist günstigerweise aus Kunststoff gebildet. Sie ist härter als die Weichkomponente und führt zu einem Brillenbügel, der zum Beispiel belastbar ist und für einen sicheren Sitz an dem Kopf des Brillenträgers sorgt. Die Hartkomponente erstreckt sich vorzugweise (im Wesentlichen), bevorzugt oben, über die gesamte Länge des Brillenbügels. Sie ist vergleichsweise formstabil.

Auch die Ausgestaltung gemäß dem Unteranspruch 14 bietet dem Brillenträger einen besonders hohen Komfort bzw. verbesserte Ergonomie. Beispielsweise ist in einem Ohrbereich des Brillenbügels der Tragekomfort erhöht. Der Brillenbügel ist zum Beispiel helixförmig verdrillt. Es ist zweckmäßig, wenn zumindest 50% des Brillenbügels, bevorzugt mindestens 70% des Brillenbügels, bevorzugt der gesamte Brillenbügel, verdrillt ist.

Der Brillenbügel gemäß dem Unteranspruch 15 ist zum Beispiel nur teilweise oder über seine gesamte Länge, wie gleichmäßig, gekrümmt. Es ist zweckmäßig, wenn der Brillenbügel an eine Kopfrundung eines Brillenträgers angepasst und folglich entsprechend gekrümmt ist. Günstigerweise ist die Innenseite des Brillenbügels zumindest bereichsweise konvex und die Außenseite des Brillenbügels zumindest bereichsweise konkav.

Es ist zweckmäßig, wenn der Brillenbügel mindestens ein Logofeld aufweist. Vorzugsweise ist unter dem Logofeld und/oder seitlich desselben mindestens eine Durchgangsöffnung angeordnet. Die mindestens eine Durchgangsöffnung erlaubt zum Beispiel eine besonders gute Belüftung, was wiederum den Tragekomfort erhöht. Das Logofeld ist aufgrund der mindestens einen Durchgangsöffnung quasi teilweise freischwebend. Es trägt zum Beispiel außenseitig eine Marke des Herstellers. Beispielsweise ist über die mindestens eine Durchgangsöffnung mindestens ein Hilfsmittel bzw. Zubehör, wie ein Kopfbandhaken, bevorzugt lösbar, an dem Brillenbügel, direkt oder indirekt, anordenbar bzw. anhängbar. Eine solche Durchgangsöffnung sorgt auch für eine weitere Gewichtsreduzierung bzw. Materialeinsparung.

Nachfolgend wird unter Bezugnahme auf die beigefügte Zeichnung eine bevorzugte Ausführungsform der Erfindung beispielhaft beschrieben. Dabei zeigen:
- Fig. 1: eine perspektivische Ansicht einer Brille mit zwei erfindungsgemäßen Brillenbügeln,
- Fig. 2: eine Seitenansicht der in der Fig. 1 veranschaulichten Brille,
- Fig. 3: einen Querschnitt durch einen Brillenbügel der gezeigten Brille,
- Fig. 4: eine Brillenbügel-Innenseite des gezeigten Brillenbügels,
- Fig. 5: eine Ansicht des gezeigten Brillenbügels von unten,
- Fig. 6: eine Ansicht, die isoliert die Trennstege des veranschaulichten Brillenbügels darstellt, und
- Fig. 7: eine Draufsicht auf den veranschaulichten Brillenbügel

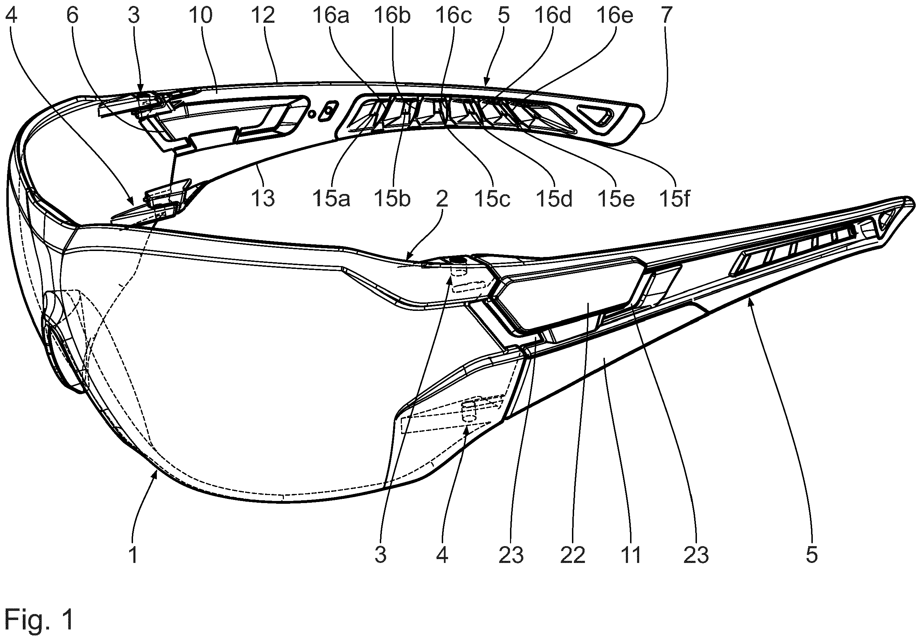

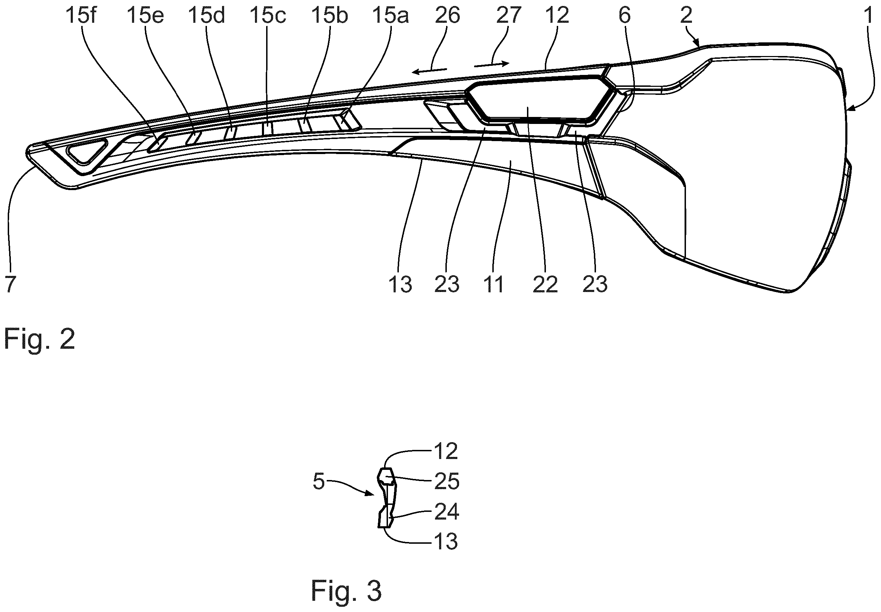

Eine in den Fig. 1, 2 in der Gesamtheit dargestellte Brille umfasst eine Scheibenanordnung 1 und ein an der Scheibenanordnung 1 oben angeordnetes Rahmenteil 2. In jedem seitlichen Endbereich der Scheibenanordnung 1 sind innenseitig ein oberer Gelenkvorsprung 3 und ein unterer Gelenkvorsprung 4 angeordnet. Jeder Gelenkvorsprung 3, 4 hat eine zylindrische Gelenkaufnahme, die bevorzugt umfangsseitig geschlossen ist. Die benachbart zueinander angeordneten Gelenkaufnahmen fluchten miteinander und geben eine Brillenbügel-Verschwenkachse vor.

Die Brille weist außerdem zwei Brillenbügel 5 auf, die in montiertem Zustand mit den Gelenkaufnahmen in Eingriff stehen und so zwischen einer eingeklappten Aufbewahrungsstellung und einer ausgeklappten Tragestellung (siehe Fig. 1) verschwenkbar sind.

Die Brille ist bezüglich einer Hauptebene symmetrisch, die durch eine Nasenaufnahme der Scheibenanordnung 1 geht.

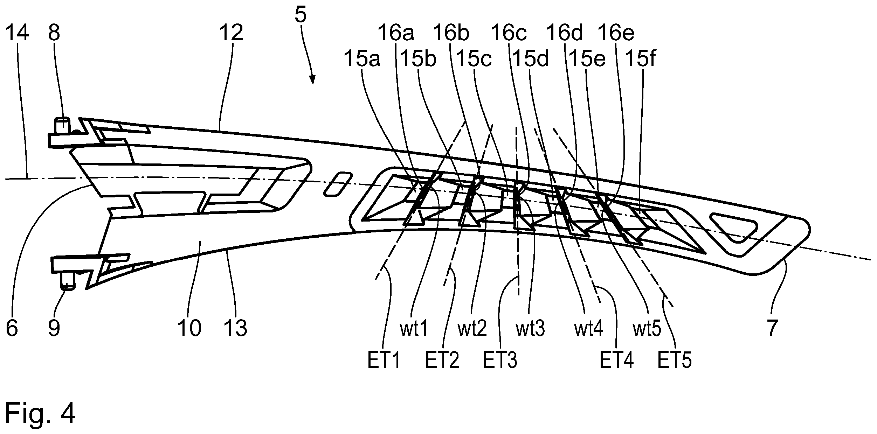

Die Brillenbügel 5 sind konstruktiv identisch. Jeder Brillenbügel 5 hat ein gelenkseitiges bzw. vorderes Ende 6 und ein dem gelenkseitigen Ende 6 gegenüberliegendes freies bzw. hinteres Ende 7. Jeder Brillenbügel 5 trägt benachbart zu dem gelenkseitigen Ende 6 einen oberen Gelenkstift 8 und einen unteren Gelenkstift 9. Jeder Gelenkstift 8, 9 ist zylindrisch und komplementär zu der zugeordneten Gelenkaufnahme ausgeführt (Fig. 4). In zusammengesetztem Zustand greift jeder obere Gelenkstift 8 von unten in die Gelenkaufnahme des jeweiligen oberen Gelenkvorsprungs 3 ein, während jeder untere Gelenkstift 9 von oben in die Gelenkaufnahme des entsprechenden unteren Gelenkvorsprungs 4 eingreift. Andere Gelenkausgestaltungen sind alternativ möglich.

Jeder Brillenbügel 5 weist ferner eine Innenseite 10 und eine der Innenseite 10 gegenüberliegende Außenseite 11 auf. In der Tragestellung sind die Innenseiten 10 der Brillenbügel 5 einander zugewandt, während die Außenseiten 11 der Brillenbügel 5 dann einander abgewandt sind. In der Tragestellung erstrecken sich die Innenseiten 10 der Brillenbügel 5 benachbart zu einem Kopf eines Brillenträgers (nicht dargestellt).

Außerdem hat jeder Brillenbügel 5 eine Oberseite 12 und eine der Oberseite 12 gegenüberliegende Unterseite 13. In der Tragestellung erstreckt sich die Oberseite 12 oberhalb der benachbarten Unterseite 13 und ist nach oben gewandt. Die Unterseite 13 ist nach unten gewandt.

Jeder Brillenbügel 5 ist länglich und, insbesondere gleichmäßig, gekrümmt. Jeder Brillenbügel 5 hat eine innere, insbesondere zentrale, Brillenbügel-Längslinie bzw. -achse 14, die ebenfalls entsprechend gekrümmt ist (Fig. 4).

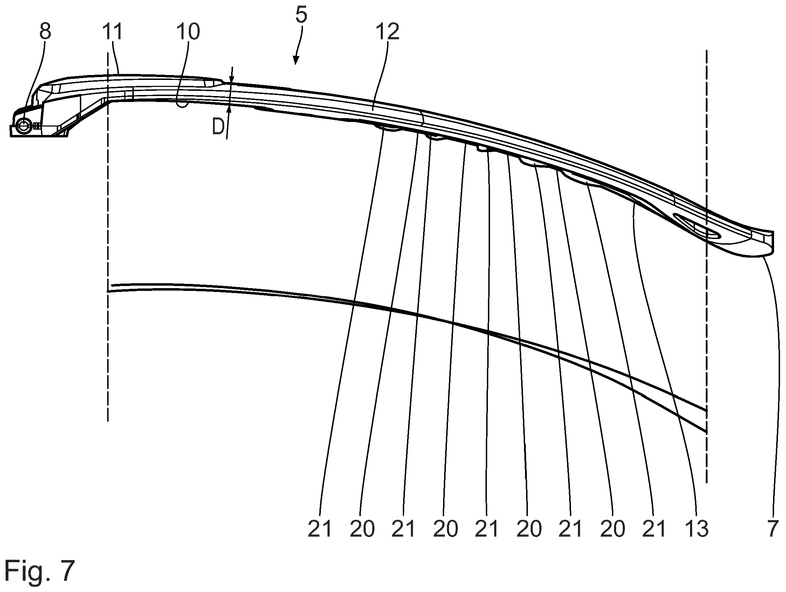

Wie beispielsweise vor allem Fig. 7 zeigt, ist jeder Brillenbügel 5 außerdem um die Brillenbügel-Längsachse 14 verdrillt. Die Verdrillung liegt beispielsweise, wie gleichmäßig, über den gesamten Brillenbügel 5 oder nur über einen Teilbereich, wie einen Mittenbereich, vorderen Endbereich und/oder hinteren Endbereich, desselben vor. Jeder Brillenbügel 5 ist bevorzugt derart verdrillt, dass die Oberseite 12 im Bereich des freien Endes 7 in der Tragestellung weiter seitlich außen als die benachbarte Unterseite 13 des jeweiligen Brillenbügels 5 ist.

Jeder Brillenbügel 5 hat mehrere Durchgänge 15, hier sechs Durchgänge 15, nämlich einen ersten Durchgang 15a, einen zweiten Durchgang 15b, einen dritten Durchgang 15c, einen vierten Durchgang 15d, einen fünften Durchgang 15e und einen sechsten Durchgang 15f. Der erste Durchgang 15a hat dabei den kleinsten Abstand zu dem gelenkseitigen Ende 6. Der sechste Durchgang 15f weist den größten Abstand zu dem gelenkseitigen Ende 6 auf. Bei jedem Brillenbügel 5 sind die Durchgänge 15 längs der Brillenbügel-Längslinie 14 nebeneinander und benachbart zueinander angeordnet. Jeder Durchgang 15 ist umfangsseitig geschlossen und durchdringt den jeweiligen Brillenbügel 5 vollständig.

Die in dem jeweiligen Brillenbügel 5 angeordneten Durchgänge 15 unterscheiden sich voneinander, insbesondere durch ihre Orientierung. Zwischen benachbart zueinander angeordneten Durchgängen 15 ist jeweils ein Trennsteg 16 angeordnet. Jeder Brillenbügel 5 hat somit mehrere Trennstege 16, hier fünf Trennstege 16, nämlich einen ersten Trennsteg 16a, einen zweiten Trennsteg 16b, einen dritten Trennsteg 16c, einen vierten Trennsteg 16d und einen fünften Trennsteg 16e. Der erste Trennsteg 16a hat dabei den kleinsten Abstand zu dem gelenkseitigen Ende 6. Der fünfte Trennsteg 16e weist den größten Abstand zu dem gelenkseitigen Ende 6 auf. Jeder Trennsteg 16 erstreckt sich von einem zu der Unterseite 13 benachbarten Brillenbügel-Bereich nach oben in Richtung auf die Oberseite 12. Jeder Trennsteg 16 verläuft bevorzugt über die gesamte dort vorherrschende, zwischen der Innenseite 10 und der Außenseite 11 reichende Dicke D des Brillenbügels 5.

Die Trennstege 16 des jeweiligen Brillenbügels 5 sind unterschiedlich orientiert (Fig. 4). Der erste Trennsteg 16a spannt eine erste Trennsteg-Ebene ET1 auf, die mit der Brillenbügel-Längslinie 14 dort einen ersten Trennsteg-Winkel wt1 einschließt. Der zweite Trennsteg 16b spannt eine zweite Trennsteg-Ebene ET2 auf, die mit der Brillenbügel-Längslinie 14 dort einen zweiten Trennsteg-Winkel wt2 einschließt. Der erste Trennsteg 16a und 16b erstrecken sich jeweils von einem zu der Unterseite 13 benachbarten Brillenbügel-Bereich nach schräg oben weg von dem gelenkseitigen Ende 6.

Der dritte Trennsteg 16c, der in Bezug auf die Trennsteg-Anordnung in dem jeweiligen Brillenbügel 5 einen zentralen Trennsteg bildet, spannt eine dritte Trennsteg-Ebene ET3 auf, die mit der Brillenbügel-Längslinie 14 dort einen dritten Winkel wt3 einschließt. Der dritte Winkel wt3 ist (im Wesentlichen) ein rechter Winkel. Die dritte Trennsteg-Ebene ET3 liegt somit (im Wesentlichen) in einer Lotrechten in Bezug auf die Brillenbügel-Längslinie 14.

Der vierte Trennsteg 16d spannt eine vierte Trennsteg-Ebene ET4 auf, die mit der Brillenbügel-Längslinie 14 dort einen vierten Trennsteg-Winkel wt4 einschließt. Der fünfte Trennsteg 16d spannt eine fünfte Trennsteg-Ebene ET5 auf, die mit der Brillenbügel-Längslinie 14 dort einen fünften Trennsteg-Winkel wt5 einschließt. Der vierte und fünfte Trennsteg 16d, 16e verlaufen von einem zu der Unterseite 13 benachbarten Brillenbügel-Bereich nach schräg oben weg von dem freien Ende 7.

Der erste Trennsteg-Winkel wt1 ist kleiner als der zweite Trennsteg-Winkel wt2, der wiederum kleiner als der dritte Trennsteg-Winkel wt3 ist. Der erste Trennsteg-Winkel wt1 liegt bevorzugt zwischen 60° und 80°. Der zweite Trennsteg-Winkel wt2 liegt vorzugsweise zwischen 70° und 85°.

Der fünfte Trennsteg-Winkel wt5 ist kleiner als der vierte Trennsteg-Winkel wt4, der wiederum kleiner als der dritte Trennsteg-Winkel wt3 ist. Der fünfte Trennsteg-Winkel wt5 liegt bevorzugt zwischen 30° und 55°. Der vierte Trennsteg-Winkel wt4 liegt vorzugsweise zwischen 50° und 70°.

Die erste Trennsteg-Ebene ET1 und die zweite Trennsteg-Ebene ET2 schließen mit einer entsprechenden Lotrechten jeweils einen positiven Winkel ein, während die vierte Trennsteg-Ebene ET4 und fünfte Trennsteg-Ebene ET5 mit einer entsprechenden Lotrechten einen entsprechenden negativen Winkel einschließen. Die Trennstege sind 16 beispielsweise wie bei der Aminosäure angeordnet bzw. orientiert.

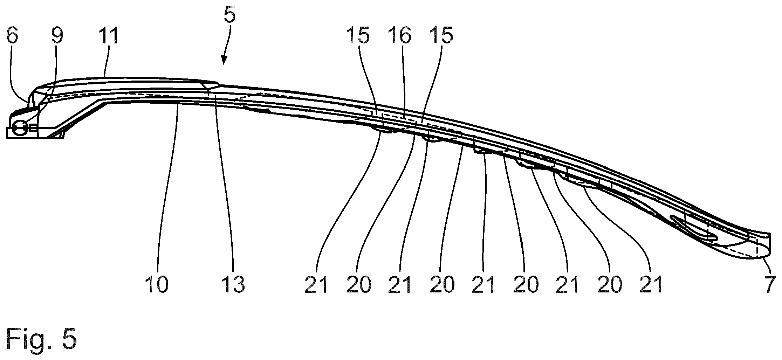

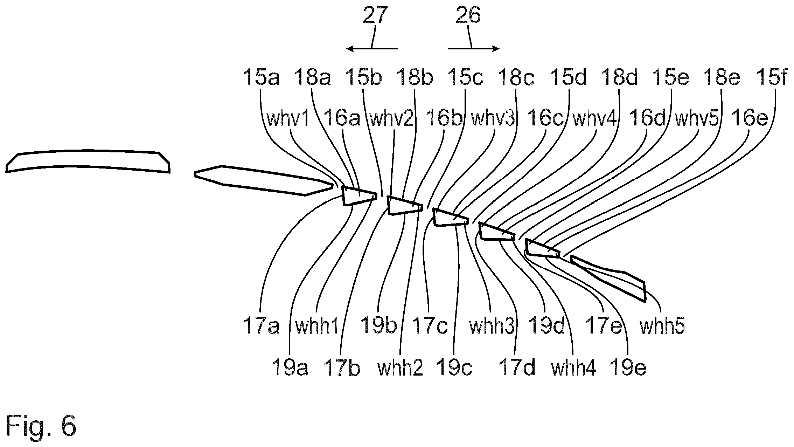

Wie insbesondere Fig. 5, 6 zeigen, weist jeder Trennsteg 16 des jeweiligen Brillenbügels 5 in einem Längsschnitt desselben eine im Wesentlichen dreieckförmige Form bzw. Gestalt auf.

Jeder erste Trennsteg 16a hat eine erste Trennsteg-Vorderseite 17a und eine erste Trennsteg-Außenseite 18a sowie eine erste Trennsteg-Innenseite 19a (Fig. 6). Jeder zweite Trennsteg 16b hat eine zweite Trennsteg-Vorderseite 17b und eine zweite Trennsteg-Außenseite 18b sowie eine zweite Trennsteg-Innenseite 19b. Jeder dritte Trennsteg 16c hat eine dritte Trennsteg-Vorderseite 17c und eine dritte Trennsteg-Außenseite 18c sowie eine dritte Trennsteg-Innenseite 19c. Jeder vierte Trennsteg 16d hat eine vierte Trennsteg-Vorderseite 17d und eine vierte Trennsteg-Außenseite 18d sowie eine vierte Trennsteg-Innenseite 19d. Jeder fünfte Trennsteg 16e hat eine fünfte Trennsteg-Vorderseite 17e und eine fünfte Trennsteg-Außenseite 18e sowie eine fünfte Trennsteg-Innenseite 19e. Die Trennsteg-Vorderseiten 17a bis 17e sind dem gelenkseitigen Ende 6 zugewandt. Die Trennsteg-Außenseiten 18a bis 18e erstrecken sich benachbart zu der Außenseite 11 des jeweiligen Brillenbügels 5 bzw. bilden diese mit aus. Die Trennsteg-Innenseiten 19a bis 19e verlaufen benachbart zu der Innenseite 10 des jeweiligen Brillenbügels 5 bzw. bilden diese mit aus.

Jede Trennsteg-Vorderseite 17 bildet bevorzugt eine, insbesondere steile, Rampe aus und ist günstigerweise eben. Es ist zweckmäßig, wenn jede Trennsteg-Außenseite 18 eben ist. Jede Trennsteg-Innenseite 19 bildet vorzugsweise eine, insbesondere flache, Rampe aus und ist vorzugsweise eben.

Jeder erste Trennsteg 16a hat zwischen seiner ersten Trennsteg-Außenseite 18a und seiner ersten Trennsteg-Innenseite 19a einen hinteren ersten Haltewinkel whh1. Jeder erste Trennsteg 16a hat zwischen seiner ersten Trennsteg-Vorderseite 17a und seiner ersten Trennsteg-Außenseite 18a einen vorderen ersten Haltewinkel whv1. Jeder zweite Trennsteg 16b hat zwischen seiner zweiten Trennsteg-Außenseite 18b und seiner zweiten Trennsteg-Innenseite 19b einen hinteren zweiten Haltewinkel whh2. Jeder zweite Trennsteg 16b hat zwischen seiner zweiten Trennsteg-Vorderseite 17b und seiner zweiten Trennsteg-Außenseite 18b einen vorderen zweiten Haltewinkel whv2. Jeder dritte Trennsteg 16c hat zwischen seiner dritten Trennsteg-Außenseite 18c und seiner dritten Trennsteg-Innenseite 19c einen hinteren dritten Haltewinkel whh3. Jeder dritte Trennsteg 16c hat zwischen seiner dritten Trennsteg-Vorderseite 17c und seiner dritten Trennsteg-Außenseite 18c einen vorderen dritten Haltewinkel whv3.

Jeder vierte Trennsteg 16d hat zwischen seiner vierten Trennsteg-Außenseite 18d und seiner vierten Trennsteg-Innenseite 19d einen hinteren vierten Haltewinkel whh4. Jeder vierte Trennsteg 16d hat zwischen seiner vierten Trennsteg-Vorderseite 17d und seiner vierten Trennsteg-Außenseite 18d einen vorderen vierten Haltewinkel whv4. Jeder fünfte Trennsteg 16e hat zwischen seiner fünften Trennsteg-Außenseite 18e und seiner fünften Trennsteg-Innenseite 19e einen hinteren fünften Haltewinkel whh5. Jeder fünfte Trennsteg 16e hat zwischen seiner fünften Trennsteg-Vorderseite 17a und seiner fünften Trennsteg-Außenseite 18a einen vorderen fünften Haltewinkel whv5.

Die Trennsteg-Vorderseiten 17 des jeweiligen Brillenbügels 5 verlaufen (im Wesentlichen) parallel zueinander. Die Trennsteg-Außenseite 18 liegen auf einer gemeinsamen Krümmungslinie.

Die vorderen Haltewinkel whv1, whv2, whv3, whv4, whv5 nehmen bevorzugt von dem gelenkseitigen Ende 6 aus ab. Der vordere erste Haltewinkel whv1 liegt zum Beispiel zwischen 65° und 85°. Der vordere fünfte Haltewinkel whv5 liegt günstigerweise zwischen 45° und 65°.

Die hinteren Haltewinkel whh1, whh2, whh3, whh4, whh5 nehmen von dem gelenkseitigen Ende 6 aus ab. Der hintere erste Haltewinkel whh1 liegt zwischen 15° und 25°. Der hintere fünfte Haltewinkel whh5 liegt zwischen 5° und 20°.

Jeder Trennsteg 16 steht gegenüber einem Brillenbügel-Grundkörper 20 nach innen unter Bildung eines freien Halteüberstands 21 vor.

Jeder Brillenbügel 5 hat zum Beispiel benachbart zu dem gelenkseitigen Ende 6 außen ein Logofeld 22 (Fig. 1), das imstande ist, ein Logo, wie eine Marke, zu tragen. Jeder Brillenbügel 5 weist benachbart zu dem Logofeld 22 eine Durchgangsöffnung 23 auf. Jede Durchgangsöffnung 23 durchsetzt den jeweiligen Brillenbügel 5 vollständig. Hier erstreckt sich jede Durchgangsöffnung 23 unterhalb des jeweiligen Logofelds 22 und benachbart zu beiden Enden desselben. Jede Durchgangsöffnung 23 ist beispielsweise unten unter Bildung von zwei Durchgangs-Teilöffnungen unterbrochen. Eine Ausgestaltung ohne Logofeld 22 ist alternativ möglich.

Jeder Brillenbügel 5 ist einteilig und als Zweikomponenten-Brillenbügel ausgeführt. Jeder Brillenbügel 5 hat eine Weichkomponente 24 und eine Hartkomponente 25, die mit der Weichkomponente 24 bereichsweise fest verbunden und härter als diese ist (Fig. 3). Die Hartkomponente 25 erstreckt sich bei jedem Brillenbügel 5 benachbart zu dessen Oberseite 12. Zum Beispiel sind die Gelenkstifte 8, 9 durch die Hartkomponente 25 gebildet. Die Durchgänge 15 sind jeweils in der Weichkomponente 24 ausgebildet. Auch die Trennstege 16 sind jeweils durch die Weichkomponente 24 gebildet.

Nachfolgend wird die Benutzung der Brille bzw. der Brillenbügel 5 beschrieben. Bei einem Aufsetzen der Brille werden die Brillenbügel 5 an dem Kopf des Brillenträgers in einer Aufsetzrichtung 26 in Richtung auf das jeweilige freie Ende 7 verschoben. Die Innenseiten 10 der Brillenbügel 5 sind dabei dem Kopf des Brillenträgers zugewandt. Die Halteüberstände 21 kommen mit dem Kopf in Anlage. Insbesondere sind dabei die Trennsteg-Innenseiten 19 wirksam. Die Weichkomponente 24 erlaubt eine Auslenkung der Trennstege 16, unter anderem auch der Halteüberstände 21.

Bei einem Absetzen der Brille werden die Brillenbügel 5 in einer zu der Aufsetzrichtung 26 gegensinnigen Absetzrichtung 27 in Richtung auf das gelenkseitige Ende 6 an dem Kopf des Brillenträgers verschoben. Die Halteüberstände 21 liegen dabei an dem Kopf des Brillenträgers an. Insbesondere sind die Trennsteg-Vorderseiten 17 wirksam. Die Weichkomponente 24 erlaubt eine Auslenkung der Trennstege 16, unter anderem auch der Halteüberstände 21.

Insbesondere ist durch die Ausbildung bzw. Anordnung der Trennstege 16 auch vermeidbar, dass die Brillenbügel 5 beim Aufsetzen bzw. Absetzen der Brille an den Haaren ziehen, was im Allgemeinen schmerzhaft ist.

Jeder Trennsteg 16 hat einen hinteren Keil in Richtung auf das freie bzw. hintere Ende 7, der einen flachen Winkel aufweist bzw. einschließt und bei einem Aufsetzen der Brille einen vergleichsweise geringen Widerstand erzeugt. Ein vorderer Keil des jeweiligen Trennstegs 16 in Richtung auf das gelenkseitige bzw. vordere Ende 6 hat dagegen, insbesondere im Vergleich mit dem hinteren Winkel, einen größeren Winkel und klemmt mehr.

Die hier verwendeten Ausdrücke "Oberseite", "Unterseite", "Innenseite", "Außenseite", "vorne", "hinten" oder dergleichen beziehen sich insbesondere auf ein bestimmungsgemäßes Tragen der Brille.

## Patentansprüche

1. Brillenbügel für eine Brille, insbesondere für eine Arbeitsschutzbrille,
a. mit einem gelenkseitigen Ende (6),
b. mit einem dem gelenkseitigen Ende (6) gegenüberliegenden freien Ende (7),
c. mit einer Innenseite (10) zur benachbarten Anordnung zu einem Kopf eines Brillenträgers bei einem Einsatz des Brillenbügels (5),
d. mit einer der Innenseite (10) gegenüberliegenden Außenseite (11),
e. mit einer Oberseite (12),
f. mit einer der Oberseite (12) gegenüberliegenden Unterseite (13),
g. mit mindestens drei Durchgängen (15), die
i. jeweils eine Verbindung zwischen der Innenseite (10) und der Außenseite (11) herstellen, und
ii. längs einer Brillenbügel-Längserstreckung nebeneinander angeordnet sind, und
h. mit mindestens zwei Trennstegen (16), die
i. die Durchgänge (15) voneinander trennen, und
ii. unterschiedliche Winkel (wt1, wt2, wt3, wt4, wt5) mit einer Brillenbügel-Längslinie (14) einschließen,
**dadurch gekennzeichnet, dass**
i. mindestens zwei der Trennstege (16) gegenüber der Innenseite (10) gegenüber einem Brillenbügel-Grundkörper (20) unter Bildung eines jeweiligen Halteüberstands (21) überstehen, und
j. jeder Halteüberstand (21) eine hintere Halteflanke (19) aufweist, die mit der benachbarten Außenseite (11) einen hinteren Haltewinkel (whh1, whh2, whh3, whh4, whh5) einschließt, der jeweils zwischen 5° und 60° liegt.

2. Brillenbügel nach Anspruch 1, **dadurch gekennzeichnet, dass** mindestens ein dem gelenkseitigen Ende (6) folgender Trennsteg (16a, 16b) von einem zu der Unterseite (13) benachbarten Brillenbügel-Bereich ausgehend schräg nach oben weg von dem gelenkseitigen Ende (6) verläuft und vorzugsweise mit der Brillenbügel-Längslinie (14) einen Winkel (wt1, wt2) einschließt, der jeweils von 40° bis 85°, bevorzugt von 50° bis 85°, reicht.

3. Brillenbügel nach Anspruch 1 oder 2, **dadurch gekennzeichnet, dass** mindestens ein dem freien Ende (7) folgender Trennsteg (16d, 16e) von einem zu der Unterseite (13) benachbarten Brillenbügel-Bereich ausgehend schräg nach oben weg von dem freien Ende (7) verläuft und vorzugsweise mit der Brillenbügel-Längslinie (14) einen Winkel (wt4, wt5) einschließt, der jeweils von 30° bis 85°, bevorzugt von 35° bis 80°, reicht.

4. Brillenbügel nach einem der vorherigen Ansprüche, **gekennzeichnet durch** mindestens drei der Trennstege (16), wobei mindestens ein in einem zentralen Bereich der Trennstege (16) angeordneter zentraler Trennsteg (16c) mit der Brillenbügel-Längslinie (14) einen Winkel (wt3) einschließt, der jeweils von 85° bis 95° reicht.

5. Brillenbügel nach einem der vorherigen Ansprüche, **dadurch gekennzeichnet, dass** jeder der Trennstege (16) in einem Längsschnitt des Brillenbügels (5) eine dreieckförmige, im Wesentlichen dreieckförmige Form oder trapezförmige Form aufweist.

6. Brillenbügel nach Anspruch 5, **dadurch gekennzeichnet, dass** die Formen der Trennstege (16) in dem Längsschnitt des Brillenbügels (5) unterschiedlich sind.

7. Brillenbügel nach Anspruch 5 oder 6, **dadurch gekennzeichnet, dass** von dem gelenkseitigen Ende (6) ausgehend ein Winkel (whh1, whh2, whh3, whh4, whh5) zwischen einer zu der Außenseite (11) des Brillenbügels (5) benachbart angeordneten Trennsteg-Außenseite (18) und einer zu der Innenseite (10) des Brillenbügels (5) benachbart angeordneten Trennsteg-Innenseite (19) abnimmt.

8. Brillenbügel nach einem der vorherigen Ansprüche, **dadurch gekennzeichnet, dass** alle Trennstege (16) gegenüber der Innenseite (10) gegenüber einem Brillenbügel-Grundkörper (20) unter Bildung eines jeweiligen Halteüberstands (21) überstehen.

9. Brillenbügel nach einem der vorherigen Ansprüche, **dadurch gekennzeichnet, dass** jeder Halteüberstand (21) eine dem gelenkseitigen Ende (6) zugewandte vordere Halteflanke (17) aufweist, die mit der benachbarten Außenseite (11) einen vorderen Haltewinkel (whv1, whv2, whv3, whv4, whv5) einschließt, der jeweils zwischen 30° und 85°, bevorzugt zwischen 35° und 80°, liegt.

10. Brillenbügel nach einem der vorherigen Ansprüche, **dadurch gekennzeichnet, dass** jeder Halteüberstand (21) eine hintere Halteflanke (19) aufweist, die mit der benachbarten Außenseite (11) einen hinteren Haltewinkel (whh1, whh2, whh3, whh4, whh5) einschließt, der jeweils zwischen 15° und 55° liegt.

11. Brillenbügel nach einem der vorherigen Ansprüche, **dadurch gekennzeichnet, dass** die hinteren Haltewinkel (whh1, whh2, whh3, whh4, whh5) von dem gelenkseitigen Ende (6) ausgehend abnehmen.

12. Brillenbügel nach einem der vorherigen Ansprüche, **gekennzeichnet durch** eine Weichkomponente (24), in welcher die Durchgänge (15) ausgebildet sind.

13. Brillenbügel nach einem der vorherigen Ansprüche, **gekennzeichnet durch** eine Hartkomponente (25), die sich benachbart zu den Durchgängen (15) oberhalb derselben erstreckt.

14. Brillenbügel nach einem der vorherigen Ansprüche, **gekennzeichnet durch** mindestens einen um die Brillenbügel-Längslinie (14) verdrillten Bereich, wobei vorzugsweise der Brillenbügel (5) insgesamt um 10° bis 25° verdrillt ist.

15. Brillenbügel nach einem der vorherigen Ansprüche, **gekennzeichnet durch** eine zumindest bereichsweise Brillenbügelkrümmung.

## Claims

1. Glasses temple for glasses, in particular for safety glasses,
a. having a hinge end (6),
b. having a free end (7) opposite the hinge end (6),
c. having an inner face (10) for arrangement adjacent to a head of a wearer when the glasses temple (5) is in use,
d. having an outer face (11) opposite the inner face (10),
e. having an upper face (12),
f. having a lower face (13) opposite the upper face (12),
g. having at least three passages (15), which
i. each establish a connection between the inner face (10) and the outer face (11), and
ii. are arranged alongside one another along a glasses temple longitudinal extension, and
h. having at least two separating bars (16), which
i. separate the passages (15) from one another, and
ii. are at different angles (wt1, wt2, wt3, wt4, wt5) to a glasses temple longitudinal line (14),
**characterized in that**
i. at least two of the separating bars (16) project with respect to the inner face (10) with respect to a glasses temple base body (20) upon forming a respective holding projection (21), and
j. each holding projection (21) has a rear holding flank (19), which is at a rear holding angle (whh1, whh2, whh3, whh4, whh5) to the adjacent outer face (11) which angle in each case is between 5° and 60°.

2. Glasses temple according to claim 1, **characterised in that** at least one separating bar (16a, 16b) following the hinge end (6) extends upwards at an inclination from a glasses temple region adjacent to the lower face (13), away from the hinge end (6), and is preferably at an angle (wt1, wt2) to the glasses temple longitudinal line (14) which angle in each case ranges from 40° to 85°, preferably from 50° to 85°.

3. Glasses temple according to either claim 1 or claim 2, **characterised in that** at least one separating bar (16d, 16e) following the free end (7) extends upwards at an inclination from a glasses temple region adjacent to the lower face (13), away from the free end (7), and is preferably at an angle (wt4, wt5) to the glasses temple longitudinal line (14) which angle in each case ranges from 30° to 85°, preferably from 35° to 80°.

4. Glasses temple according to any of the preceding claims, **characterised by** at least three of the separating bars (16), wherein at least one central separating bar (16c) arranged in a central region of the separating bars (16) is at an angle (wt3) to the glasses temple longitudinal line (14) which in each case ranges from 85° to 95°.

5. Glasses temple according to any of the preceding claims, **characterised in that** each of the separating bars (16) has a triangular, substantially triangular or trapezium shape in a longitudinal section of the glasses temple (5).

6. Glasses temple according to claim 5, **characterised in that** the shapes of the separating bars (16) are different in the longitudinal section of the glasses temple (5).

7. Glasses temple according to either claim 5 or claim 6, **characterised in that** starting from the hinge end (6) an angle (whh1, whh2, whh3, whh4, whh5) decreases between a separating bar outer face (18), arranged adjacent to the outer face (11) of the glasses temple (5), and a separating bar inner face (19), arranged adjacent to the inner face (10) of the glasses temple (5).

8. Glasses temple according to any of the preceding claims, **characterised in that** all of the separating bars (16), project with respect to the inner face (10) with respect to a glasses temple base body (20) upon forming a respective holding projection (21).

9. Glasses temple according to one of the preceding claims, **characterised in that** each holding projection (21) has a front holding flank (17), which faces the hinge end (6) and which is at a front holding angle (whv1, whv2, whv3, whv4, whv5) to the adjacent outer face (11) which angle in each case is between 30° and 85°, preferably between 35° and 80°.

10. Glasses temple according to one of the preceding claims, **characterised in that** each holding projection (21) has a rear holding flank (19), which is at a rear holding angle (whh1, whh2, whh3, whh4, whh5) to the adjacent outer face (11) which angle in each case is between 15° and 55°.

11. Glasses temple according to one of the preceding claims, **characterised in that** the rear holding angles (whh1, whh2, whh3, whh4, whh5) decrease starting from the hinge end (6).

12. Glasses temple according to any of the preceding claims, **characterised by** a soft component (24) in which the passages (15) are formed.

13. Glasses temple according to any of the preceding claims, **characterised by** a hard component (25) which extends adjacent to the passages (15) above it.

14. Glasses temple according to any of the preceding claims, **characterised by** at least one region twisted around the glasses temple longitudinal line (14), the glasses temple (5) overall preferably being twisted through 10° to 25°.

15. Glasses temple according to any of the preceding claims, **characterised by** a curvature of the glasses temple at least in regions.

## Revendications

1. Branche de lunettes destinée à des lunettes, notamment des lunettes de protection pour le travail, comprenant
a. une extrémité côté charnière (6),
b. une extrémité libre (7) opposée à l'extrémité côté charnière (6),
c. un côté intérieur (10) destiné à être disposé adjacent à la tête d'un porteur de lunettes lors de l'utilisation de la branche de lunettes (5),
d. un côté extérieur (11) opposé au côté intérieur (10),
e. un côté supérieur (12),
f. un côté inférieur (13) opposé au côté supérieur (12),
g. au moins trois passages (15), qui
i. établissent chacun une liaison entre le côté intérieur (10) et le côté extérieur (11), et
ii. sont disposés les uns à côté des autres dans la direction longitudinale de la branche de lunettes, et
h. au moins deux éléments de séparation (16), qui
i. sépare les passages (15) les uns des autres, et
ii. forment des angles différents (wt1, wt2, wt3, wt4, wt5) avec une ligne longitudinale de branche de lunettes (14),
**caractérisée en ce que**
i. au moins deux des éléments de séparation (16) font saillie par rapport au côté intérieur (10), par rapport à un corps de base de branche de lunettes (20), formant ainsi chacun une saillie de retenue (21), et
j. chaque saillie de retenue (21) présente un flanc de retenue arrière (19) qui forme avec le côté extérieur (11) adjacent un angle de retenue arrière (whh1, whh2, whh3, whh4, whh5), respectivement compris entre 5° et 60°.

2. Branche de lunettes selon la revendication 1, **caractérisée en ce qu'**au moins un élément de séparation (16a, 16b) qui suit l'extrémité côté charnière (6) s'étend en s'éloignant de l'extrémité côté charnière (6) de manière oblique vers le haut à partir d'une zone de branche de lunettes adjacente au côté inférieur (13) et forme de préférence, avec la ligne longitudinale de branche de lunettes (14), un angle (wt1, wt2) qui s'étend respectivement de 40° à 85°, de préférence de 50° à 85°.

3. Branche de lunettes selon la revendication 1 ou 2, **caractérisée en ce qu'**au moins un élément de séparation (16d, 16e) qui suit l'extrémité libre (7) s'étend en s'éloignant de manière oblique vers le haut de l'extrémité libre (7) à partir d'une zone de branche de lunettes adjacente au côté inférieur (13) et forme de préférence, avec la ligne longitudinale de branche de lunettes (14), un angle (wt4, wt5) qui s'étend respectivement de 30° à 85°, de préférence de 35° à 80°.

4. Branche de lunettes selon l'une des revendications précédentes, **caractérisée par** au moins trois des éléments de séparation (16), au moins un élément de séparation central (16c) disposé dans une zone centrale des éléments de séparation (16) formant, avec la ligne longitudinale de branche de lunettes (14), un angle (wt3) qui s'étend respectivement de 85° à 95°.

5. Branche de lunettes selon l'une des revendications précédentes, **caractérisée en ce que** chacun des éléments de séparation (16) présente, dans une coupe longitudinale de la branche de lunettes (5), une forme triangulaire, sensiblement triangulaire ou une forme trapézoïdale.

6. Branche de lunettes selon la revendication 5, **caractérisée en ce que** les formes des éléments de séparation (16) sont différentes dans la coupe longitudinale de la branche de lunettes (5).

7. Branche de lunettes selon la revendication 5 ou 6, **caractérisée en ce qu'**un angle (whh1, whh2, whh3, whh4, whh5) entre un côté extérieur d'élément de séparation (18) disposé adjacent au côté extérieur (11) de la branche de lunettes (5) et un côté intérieur d'élément de séparation (19) disposé adjacent au côté intérieur (10) de la branche de lunettes (5) diminue à partir de l'extrémité côté charnière (6).

8. Branche de lunettes selon l'une des revendications précédentes, **caractérisée en ce que** tous les éléments de séparation (16) font saillie par rapport au côté intérieur (10), par rapport à un corps de base de branche de lunettes (20), formant ainsi respectivement une saillie de retenue (21).

9. Branche de lunettes selon l'une des revendications précédentes, **caractérisée en ce que** chaque saillie de retenue (21) présente un flanc de retenue avant (17) orienté vers l'extrémité côté charnière (6), qui forme, avec le côté extérieur (11) adjacent, un angle de retenue avant (whv1, whv2, whv3, whv4, whv5), respectivement compris entre 30° et 85°, de préférence entre 35° et 80°.

10. Branche de lunettes selon l'une des revendications précédentes, **caractérisée en ce que** chaque saillie de retenue (21) présente un flanc de retenue arrière (19) qui forme, avec le côté extérieur (11) adjacent, un angle de retenue arrière (whh1, whh2, whh3, whh4, whh5), respectivement compris entre 15° et 55°.

11. Branche de lunettes selon l'une des revendications précédentes, **caractérisée en ce que** les angles de retenue arrière (whh1, whh2, whh3, whh4, whh5) diminuent à partir de l'extrémité côté charnière (6).

12. Branche de lunettes selon l'une des revendications précédentes, **caractérisée par** un composant souple (24) dans lequel les passages (15) sont formés.

13. Branche de lunettes selon l'une des revendications précédentes, **caractérisée par** un composant dur (25) qui s'étend de manière adjacente aux passages (15) au-dessus de ceux-ci.

14. Branche de lunettes selon l'une des revendications précédentes, **caractérisée par** au moins une zone torsadée autour de la ligne longitudinale de branche de lunettes (14), la branche de lunettes (5) étant de préférence au total torsadée de 10° à 25°.

15. Branche de lunettes selon l'une des revendications précédentes, **caractérisée par** une courbure de branche de lunettes présente au moins par sections.
